Europäisches Patentamt

(19) European Patent Office

Office européen des brevets

(11) Numéro de publication: **0 106 739**
**B1**

(12) **FASCICULE DE BREVET EUROPEEN**

(51) Int. Cl.⁴: **C 04 B 35/48, B 22 D 11/10**

(45) Date de publication du fascicule du brevet:
04.12.85

(21) Numéro de dépôt: **83401830.1**

(22) Date de dépôt: **20.09.83**

(54) Composition réfractaire moulable à base de zircone partiellement stabilisée et d'un liant hydraulique alumineux, sa préparation et pièces fabriquées à partir de cette composition.

(30) Priorité: **22.09.82 FR 8215942**

(43) Date de publication de la demande:
**25.04.84 Bulletin 84/17**

(45) Mention de la délivrance du brevet:
**04.12.85 Bulletin 85/49**

(84) Etats contractants désignés:
**BE CH DE FR GB IT LI**

(56) Documents cités:
**DE - B - 1 179 852**
**FR - A - 1 593 602**
**FR - A - 2 229 662**
**GB - A - 1 222 894**

(73) Titulaire: **SOCIETE EUROPEENNE DES PRODUITS REFRACTAIRES, Les Miroirs 18, Avenue d'Alsace, F-92400 Courbevoie (FR)**

(72) Inventeur: **Guigonis, Jacques, Quartier les Hautures, F-84320 Entraigues-sur-Sorgues (FR)**

(74) Mandataire: **de Boisse, Louis, 37, Avenue Franklin D. Roosevelt, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

L'invention concerne une composition réfractaire à base de zircone partiellement stabilisée et d'un liant hydraulique alumineux que l'on peut mettre facilement à la forme désirée par coulée dans un moule puis, après prise, frittage à haute température. L'invention concerne aussi un procédé de préparation de cette composition et les pièces fabriquées à partir de ladite composition.

Il est courant de fabriquer certaines pièces réfractaires telles que des busettes pour la coulée continue de l'acier à partir de compositions à base de zircone stabilisée. Ces compositions connues ne sont pas, toutefois, entièrement satisfaisantes des points de vue de leurs propriétés mécaniques et physiques en raison notamment d'une porosité ouverte assez élevée, de l'ordre de 20%.

L'invention a pour but de fournir une nouvelle composition réfractaire moulable qui permet de produire des pièces réfractaires de qualité améliorée, présentant notamment une masse volumique accrue, une porosité ouverte réduite, une bonne résistance aux chocs thermiques et des propriétés mécaniques intéressantes.

Plus précisément, l'invention concerne une composition réfractaire constituée essentiellement:

(a) de 96 à 98% en poids de zircone partiellement stabilisée à l'oxyde de calcium, l'oxyde de magnésium ou l'oxyde d'yttrium, dont au moins 90% ont une grosseur de particules comprise entre 0,1 et 10 µm,
(b) de 2 à 4% en poids d'un liant hydraulique alumineux, cette composition présentant, en outre, l'analyse chimique globale suivante (à la précision de l'analyse):

1,4 à 3,2% en poids d'$Al_2O_3$,
3,7 à 4,6% en poids de CaO ou 0,36 à 1,15% en poids de CaO plus 2,7 à 3,5% en poids de MgO ou 0,36 à 1,15% en poids de CaO plus 5,36 à 8,80% en poids de $Y_2O_3$,

moins de 1% en poids du total $SiO_2$ + $Na_2O$ + $Fe_2O_3$ + $TiO_2$, et du $ZrO_2$ pour le complément à 100%.

L'invention concerne aussi un procédé de préparation de cette composition caractérisé en ce qu'il comprend les étapes suivantes:

I) mélanger intimement une quantité stabilisante de poudre de carbonate de calcium, de magnésium ou d'yttrium, calculée sous forme d'oxyde, choisie parmi les suivantes:

(i) 2,7 à 4,3% en poids de CaO,
(ii) 2,7 à 3,5% en poids de MgO,
(iii) 5,36 à 8,80% en poids de $Y_2O_3$,

cette poudre ayant une grosseur de particules de 0,1 à 40 µm, avec une quantité complémentaire à 100% d'une poudre de zircone monoclinique constituée à raison d'au moins 90% par des particules d'une grosseur de 0,1 à 10 µm,
II) calciner le mélange obtenu à une température comprise dans la gamme de 1000 à 1200°C pendant au moins une heure de façon à décomposer le carbonate en oxyde correspondant et à transformer partiellement la zircone monoclinique en zircone cubique.
III) mélanger intimement 96 à 98% en poids de la zircone partiellement stabilisée obtenue en II) avec 2 à 4% en poids d'un liant hydraulique alumineux et broyer le tout jusqu'à obtention d'une poudre dont au moins 90% ont une grosseur de particules dans la gamme de 0,1 à 10 µm. L'oxyde de calcium constitue le stabilisant préféré. Les quantités préférées d'oxyde stabilisant sont, en poids, de 3,42% de CaO, de 3,1% de MgO et de 7% de $Y_2O_3$.

La composition de l'invention est d'une mise en œuvre aisée. Il suffit de la mettre en suspension dans de l'eau (15 à 20 parties d'eau pour 100 parties en poids de composition), en même temps qu'une petite quantité, de préférence comprise entre 0,05 et 1% environ par rapport au poids de la composition, d'un agent dispersant permettant de réduire la quantité d'eau nécessaire. Cette mise en suspension peut s'effectuer dans n'importe quel mélangeur du commerce. Le produit résultant peut être ensuite coulé dans un moule de forme désirée, ce moule étant soumis, de préférence, à des vibrations pendant et après son remplissage pour éliminer les bulles d'air. On peut utiliser, par exemple, un moule métallique, en bois ou en une matière polymère comme le polystyrène, une résine époxy, le chlorure de polyvinyle ou un élastomère. Il faut éviter l'emploi des moules en plâtre utilisés habituellement pour la coulée en barbotine. Si désiré, la coulée peut être opérée sous vide pour effectuer un dégazage. Le moule est ensuite, de préférence, introduit dans une enceinte climatique ou un autoclave afin d'accélérer le durcissement du produit contenu dans le moule. On pourrait utiliser aussi un moule pourvu de moyens de chauffage tels que des résistances électriques. On procède ensuite au démoulage de la pièce. Cette dernière est séchée puis cuite (frittée) à une température comprise entre 1550 et

2

1700°C, de préférence d'environ 1600°C, pendant environ 2 à 10 heures, de préférence 5 heures environ.

Pendant la cuisson, une partie mineure (non déterminable) du liant alumineux réagit avec la zircone monoclinique pour former un supplément de zircone cubique, tandis qu'une partie majeure forme, avec les impuretés de la poudre de zircone initiale, une phase intercristalline. Les pièces obtenues présentent une microtexture formée de grains (15 à 70 µm) de zircone cubique entourés de grains plus petits (0,3 à 15 µm) de zircone monoclinique, et d'une phase intercristalline. Dans ces pièces la zircone cubique représente environ 60 à 70% de la zircone totale. Ces pièces présentent, en outre, une masse volumique élevée supérieure à 4930 kg/m³ et une faible porosité ouverte de 3,6 à 9%.

Ces caractéristiques sont très intéressantes car il est bien connu que les produits réfractaires doivent avoir la porosité ouverte la plus faible possible pour résister aux divers agents agressifs liquides ou gazeux auxquels ils sont soumis.

Les compositions de l'invention peuvent servir à fabriquer des pièces de forme simple ou compliquée, telles que des briques, des barreaux, des busettes de coulée de l'acier, des guides-fil, des creusets, etc. On peut également produire des tubes par simple coulée ou par extrusion, ainsi que des tubes à parois minces (par exemple 2 à 5 mm) par coulée, vibration et centrifugation.

Les exemples non limitatifs suivants qui décrivent la fabrication de busettes pour la coulée de l'acier sont donnés en vue d'illustrer l'invention:

## Exemple 1

Comme matières de départ, on a utilisé:
— une poudre de zircone monoclinique industrielle fabriquée par la Demanderesse et présentant l'analyse chimique suivante, en poids:

| | | |
|---|---|---|
| $ZrO_2$ | > | 98,5% |
| $SiO_2$ | = | 0,5% |
| $Na_2O$ | = | 0,2% |
| $Al_2O_3$ | = | 0,1% |
| $TiO_2$ | = | 0,1% |
| CaO | = | 0,05% |
| MgO | = | 0,03% et |
| $Fe_2O_3$ | = | 0,05%; |

cette poudre a, en outre, une surface spécifique d'environ 2300 m²/kg et est constituée à raison d'au moins 90% de particules d'une grosseur de 0,1 à 10 µm avec un diamètre médian de 3,7 à 4,4 µm selon les lots; aucune particule ne dépasse 40 µm;
— du carbonate de calcium fabriqué par la Société CARLO ERBA sous forme d'une poudre lourde ayant une densité apparente de 400 à 600 kg/m³, une surface spécifique de 2300 m²/kg, une grosseur de particules de 0,1 à 40 µm avec un diamètre médian de 4,6 µm, et titrant au moins 98,5% en poids de $CaCO_3$. A la place, on pourrait utiliser aussi du carbonate de calcium fabriqué par la Société OMYA sous forme d'une poudre »hydrocarb« ayant une densité apparente de 800 kg/m³, une surface spécifique de 7000 m²/kg, une grosseur de particules de 0,1 à 10 µm avec un diamètre médian de 5 µm, et titrant 99,75% de $CaCO_3$.

Cès deux carbonates de calcium donnent des pièces de propriétés semblables:
— à titre de liant alumineux, du ciment »SECAR 70« dont l'analyse chimique est, en poids:

| | | |
|---|---|---|
| $Al_2O_3$ | = | 70,5% |
| CaO | = | 28,7% |
| $SiO_2$ | = | 0,35% |
| $Fe_2O_3$ | = | 0,1% |
| MgO | = | 0,2% |
| $Na_2O$ | = | 0,35% |

ou du ciment »ALCOA CA 25« dont l'analyse chimique est, en poids:

| | | |
|---|---|---|
| $Al_2O_3$ | = | 79% |
| CaO | = | 18% |
| $SiO_2$ | = | 0,2% |
| $Fe_2O_3$ | = | 0,3% |
| MgO | = | 0,4% et |
| $Na_2O$ | = | 0,5% |

— à titre d'agent dispersant de l'ACRYLON® A 10 vendu par la Société PROTEX. A la place, on pourrait utiliser aussi, entre autres, du GALORYL® PT 268L vendu par la Compagnie Française de Produits Industriels.

On mélange à sec dans un broyeur à boulets, pendant 2 heures, 96,58 parties en poids de la poudre de zircone monoclinique industrielle sus-mentionnée avec 6,1 parties en poids de carbonate de calcium CARLO ERBA (correspondant à 3,42 parties en poids de CaO). On calcine le mélange résultant à 1200°C pendant 5 heures. Après refroidissement du mélange à la température ambiante, on mélange à sec, dans un broyeur à boulets pendant 2 heures, 96 parties en poids de ce dernier avec 4 parties en poids de ciment alumineux »SECAR 70«. 100 parties en poids de la poudre obtenue sont mises en suspension dans 16—18 parties en poids d'eau du robinet dans laquelle 0,1 partie en poids de dispersant ACRYLON® A 10 a été ajouté, en agitant le tout dans un mélangeur à palettes. La suspension résultante est coulée ensuite dans un moule métallique qui est vibré pendant 1 minute environ. Le moule rempli est placé dans une enceinte climatique (65°C, humidité relative de 40—50%) pendant environ 15—20 minutes pour durcir le produit. Après cela, on démoule la pièce, on la remet dans l'enceinte et on la sèche à 110°C de façon classique. Enfin on la fritte par cuisson à 1600°C, sous atmosphère oxydante, selon le programme suivant:

| | |
|---|---|
| — chauffage de 25°C/h de 20 à 800°C | soit 31,2 heures |
| chauffage de 40°C/h de 800 à 1000°C | soit 5,0 heures |
| chauffage de 25°C/h de 1000 à 1600°C | soit 24,0 heures |
| maintien à 1600°C pendant | soit 5,0 heures |
| — refroidissement de 25°C/h de 1600 à 940°C | soit 26,4 heures |
| refroidissement de 10°C/h de 940 à 880°C | soit 6,0 heures |
| — maintien à 880°C pendant | soit 5,0 heures |
| — refroidissement de 10°C/h de 880 à 800°C | soit 8,0 heures |
| — .refroidissement de 40°C/h de 800 à 20°C | soit 19,5 heures |
| TOTAL: | 130,1 heures |

Les busettes obtenues selon l'invention ont été testées dans une installation de coulée continue coulant des aciers calmés au silicium et ont montré une durée de vie supérieure aux busettes les plus utilisées actuellement (busettes fabriquées à partir d'une chamotte d'une grosseur de particules allant jusqu'à 300 μm et de fines constituées d'un mélange zircone monoclinique-oxyde de calcium et ayant une masse volumique de 4770 kg/m³, une structure grossière et une porosité ouverte élevée de l'ordre de 14,5%). Ainsi, à la quatrième poche coulée ($\simeq$ 1600°C) les busettes de l'art antérieur étaient déjà corrodées et à partir de la cinquième poche coulée, seules les busettes de l'invention étaient non seulement, d'une façon générale, en parfait état, mais, de plus, ne perturbaient pas le jet et ne nécessitaient donc pas un débouchage à l'oxygène. Les busettes de l'invention ont une masse volumique de 5030 kg/m³, une porosité ouverte de 5—7%, une porosité totale de 9—11% et une microtexture formée de grains de zircone cubique de l'ordre de 20 μm entourés de petits grains de zircone monoclinique de l'ordre de 5 μm, et d'une phase intercristalline. L'analyse cristallographique révèle les proportions approximatives suivantes: zircone cubique $\sim$ 60—70%, zircone monoclinique $\sim$ 25—35%, phase intercristalline $\sim$ 5%. La phase intercristalline est formée de l'aluminate de chaux du liant hydraulique et des impuretés contenues dans la poudre de zircone.

Il est à noter que lorsqu'on élève la température de frittage, la taille des grains de zircone tend à s'accroître et les propriétés mécaniques à diminuer, comme le montre le Tableau I. Ce tableau montre aussi les propriétés exceptionnelles de résistance à l'écrasement des produits de l'invention.

Exemples 2 à 7 selon l'invention et exemples A à I en dehors de l'invention

On prépare des busettes d'une façon semblable à celle décrite dans l'Exemple 1 à partir des compositions indiquées dans le Tableau II annexé, qui récapitule également les données afférentes à l'Exemple 1.

Le ciment SECAR 50 et le ciment fondu utilisé dans les Exemples F à I avaient la composition suivante, en % en poids:

SECAR 50:

| | | | |
|---|---|---|---|
| $Al_2O_3$: | 50,5 | FeO: | 1,0 |
| CaO: | 36,3 | Fe: | 0,1 |
| $SiO_2$: | 6,9 | $TiO_2$: | 1,95 |
| $Fe_2O_3$: | 2,35 | MgO: | 0,1 |

CIMENT FONDU:

| | | | |
|---|---|---|---|
| $Al_2O_3$: | 39 | FeO: | 4,0 |
| CaO: | 38,5 | $TiO_2$: | 2,5 |
| $SiO_2$: | 4,5 | MgO: | 0,6 |
| $Fe_2O_3$: | 12,0 | $Na_2O$: | 0,1 |

Ces deux ciments ne donnent pas de bons résultats probablement en raison de leurs relativement basses teneurs en $Al_2O_3$ et de leurs relativement hautes teneurs en CaO et $SiO_2$, qui affectent la composition de la phase intercristalline.

L'essai de résistance au choc thermique consistait à chauffer les busettes pendant 15 minutes à 1400°C puis à les mettre pendant 15 minutes à la température ambiante sur une plaque métallique de 5 mm d'épaisseur. On observe alors si le produit ne bouge pas, s'il se fissure ou s'il éclate. Le traitement est répété.

Les pièces étaient notées de 1 à 4, les produits notés 1 ou 2 étaient considérés comme bons, les produits notés 3 étaient considérés comme moyens et les produits notés 4 (éclatement de la pièce au 1er cycle) étaient considérés comme mauvais.

Il convient de noter que les produits bons satisfont à la relation

$$1,09 < \frac{\text{Masse volumique}}{1000 \text{ CaO}} < 1,44.$$

Il va de soi que les modes de réalisation décrits ne sont que des exemples et qu'il serait possible de les modifier, notamment par substitution d'équivalents techniques, sans sortir pour cela du cadre de l'invention.

Tableau I

| | Température de frittage en °C | | |
|---|---|---|---|
| | 1600°C | 1650°C | 1700°C |
| Masse volumique | 5000 kg/m³ | 5060 kg/m³ | 5000 kg/m³ |
| Porosité ouverte en % | 6,6 | 5,6 | 5 |
| Porosité totale en % | 10,9 | 9,8 | 10,9 |
| Module de rupture, N/mm²  à 20°C | 120,8 | 87,8 | 76,3 |
| à 1340°C | 80,2 | 58,6 | 46,4 |
| Résistance à l'écrasement, N/mm²  à 20°C | 476,6 | 442,7 | 428,9 |
| à 600°C | 499,2 | 491,4 | 471,4 |
| à 900°C | 505,2 | 487,1 | 474,9 |
| à 1200°C | 471,4 | 399,4 | 338,5 |
| à 1500°C | 94,1 | 81,4 | 95,0 |
| Post-variation de dimensions après 12 heures à 1600°C en % longueur initiale | −0,035 | +0,05 | +0,3 |

Tableau  II

| Exemple | Liant hydraulique Nature | Teneur en % | Teneur en CaO calculée en % | | |
|---------|--------------------------|-------------|--------|--------|--------|
| | | | totale | mélange $ZrO_2—CaO$ | ciment |
| 1 | SECAR 70 | 4 | 4,43 | 3,28 | 1,15 |
| 2 | | 3 | 4,18 | 3,32 | 0,86 |
| 3 | | 3 | 4,55 | 3,69 | 0,86 |
| 4 | | 2 | 4,55 | 3,98 | 0,57 |
| A | | 3 | [4,80] | 3,94 | 0,86 |
| B | | 4 | [5,29] | 4,14 | 1,15 |
| C | | 4 | [8,81] | 7,66 | 1,15 |
| 5 | CA 25 | 2 | 3,71 | 3,35 | 0,36 |
| 6 | | 4 | 4,0 | 3,28 | 0,72 |
| 7 | | 2 | 4,09 | 3,73 | 0,36 |
| D | | 1 | [3,56] | 3,38 | 0,18 |
| E | | 4 | [4,86] | 4,14 | 0,72 |
| F | SECAR 50 | 2 | 4,46 | 3,73 | 0,73 |
| G | | 4 | [5,12] | 3,66 | 1,46 |
| H | CIMENT FONDU | 2 | 4,50 | 3,73 | 0,77 |
| I | | 4 | [5,2] | 3,66 | 1,54 |

Tableau II (suite)

| Exemple | Teneur en ZrO$_2$ | Teneur en Al$_2$O$_3$ | Teneur en SiO$_2$ | Masse volumique MV | Porosite ouverte % | Classement au choc thermique | $\dfrac{MV}{1000 \ CaO}$ |
|---|---|---|---|---|---|---|---|
| 1 | 92,75 | 2,82 | — | 5030 | 4,1 | 1 | 1,13 |
| 2 | 93,71 | 2,11 | — | 5100 | 3,6 | 1 | 1,22 |
| 3 | 93,34 | 2,11 | — | 5120 | 5,5 | 2 | 1,12 |
| 4 | 94,04 | 1,41 | — | 5110 | 3,8 | 2 | 1,12 |
| A | 93,09 | 2,11 | — | 5040 | 4,0 | 3 | 1,05 |
| B | 91,89 | 2,82 | — | [5130] | 3,8 | 3 | 0,97 |
| C | 88,37 | 2,82 | — | 4850 | 0,8 | 4 | 0,55 |
| 5 | 94,71 | 1,58 | — | 5040 | 7,1 | 3 | 1,35 |
| 6 | 92,84 | 3,16 | | 4930 | 9,0 | 2 | 1,23 |
| 7 | 94,33 | 1,58 | — | 4970 | 6,1 | 3 | 1,21 |
| D | 95,65 | 0,79 | — | [5150] | 4,9 | 3 | 1,44 |
| E | 91,98 | 3,16 | — | 5060 | 7,0 | 4 | 1,04 |
| F | 94,26 | [1,01] | 0,14 | [4890] | [1,7] | 4 | 1,09 |
| G | 92,33 | 2,02 | 0,28 | 5000 | [0,9] | 4 | 0,97 |
| H | 94,27 | [0,78] | 0,09 | [4910] | [2,1] | 4 | 1,09 |
| I | 92,34 | 1,56 | 0,18 | 4930 | 1,1 | 4 | 0,94 |

[ ] = valeurs en dehors des limites prescrites; 1—2 = bon; 3 = moyen; 4 = mauvais.

## Revendications

1. Composition réfractaire constituée essentiellement:

(a) de 96 à 98% en poids de zircone partiellement stabilisée à l'oxyde de calcium, l'oxyde de magnésium ou l'oxyde d'yttrium, dont au moins 90% ont une grousseur de particules comprise entre 0,1 et 10 µm,

(b) de 2 à 4% en poids d'un liant hydraulique alumineux, cette composition présentant, en outre, l'analyse chimique globale suivante (à la précision de l'analyse):

1,4 à 3,2% en poids d'$Al_2O_3$,
3,7 à 4,6% en poids de CaO ou 0,36 à 1,15% en poids de CaO plus 2,7 à 3,5% en poids de MgO ou 0,36 à 1,15% en poids de CaO plus 5,36 à 8,80% en poids de $Y_2O_3$,

moins de 1% en poids du total $SiO_2 + Na_2O + Fe_2O_3 + TiO_2$, et du $ZrO_2$ pour le complèment à 100%.

2. Procédé de préparation d'une composition selon la revendication 1, caractérisé en ce qu'il comprend les étapes suivantes:

I) mélanger intimement une quantité stabilisante de poudre de carbonate de calcium, de magnésium ou d'yttrium, calculée sous forme d'oxyde, choisie parmi les suivantes:

(i) 2,7 à 4,3% en poids de CaO,
(ii) 2,7 à 3,5% en poids de MgO,
(iii) 5,36 à 8,80% en poids de $Y_2O_3$,

cette poudre ayant une grosseur de particules de 0,1 à 40 µm, avec une quantité complémentaire à 100% d'une poudre de zircone monoclinique constituée à raison d'au moins 90% par des particules d'une grosseur de 0,1 à 10 µm,

II) calciner le mélange obtenu à une température comprise dans la gamme de 1000 à 1200°C pendant au moins une heure de façon à décomposer le carbonate en oxyde correspondant et à transformer partiellement la zircone monoclinique en zircone cubique.

III) mélanger intimement 96 à 98% en poids de la zircone partiellement stabilisée obtenue en II) avec 2 à 4% en poids d'un liant hydraulique alumineux et broyer le tout jusqu'à obtention d'une poudre dont au moins 90% ont une grosseur de particules dans la gamme de 0,1 à 10 µm.

3. Pièce réfractaire obtenue par coulée dans un moule d'une composition selon la revendication 1 mise en suspension dans de l'eau, puis, après prise de cette composition, par frittage de la composition moulée à une température dans la gamme de 1550 à 1700°C.

4. Pièce réfractaire selon la revendication 3, caractérisée en ce qu'elle présente une microtexture formée de grains de zircone cubique d'une grosseur de 15 à 70 µm, entourés de grains de zircone monoclinique d'une grosseur de 0,3 à 15 µm, la zircone cubique représentant dans l'analyse cristallographique environ 60 à 70% de la zircone totale; cette pièce présentant une masse volumique élevée supérieure à 4930 kg/m³ et une faible porosité ouverte de 3,6 à 9%.

5. Pièce réfractaire selon la revendication 3 ou 4, caractérisée en ce qu'elle est sous la forme d'une busette de coulée de l'acier.

# 0 106 739

**Patentansprüche**

1. Feuerfeste Zusammensetzung, dadurch gekennzeichnet, daß diese in Gew.-% aus

a) 96 bis 98% Zirconoxid, das teilweise mit Calciumoxid, Magnesiumoxid oder Yttriumoxid stabilisiert ist, von dem wenigstens 90% eine Partikelgröße zwischen 0,1 und 10 µm aufweist,

b) und aus 2 bis 4% eines tonerdehaltigen hydraulischen Bindemittels besteht, wobei die Zusammensetzung folgende chemische Analyse (mit einer Genauigkeit der Analyse) in Gew.-% hat:

1,4 bis 3,2% $Al_2O_3$,
3,7 bis 4,6% CaO oder
0,36 bis 1,15% CaO und 2,7 bis 3,5% MgO oder
0,36 bis 1,15% CaO und 5,36 bis 8,80% $Y_2O_3$,

$SiO_2$ + $Na_2O$ + $Fe_2O_3$ + $TiO_2$ weniger als 1%,
Rest $ZrO_2$

2. Verfahren zur Herstellung einer Zusammensetzung nach Patentanspruch 1 gekennzeichnet durch folgende Herstellungsschritte:

I) Inniges Mischen einer Menge eines stabilisierten Pulvers aus Calciumcarbonat, Magnesiumoxid oder Yttrium berechnet aus den Oxiden in Gew.-% und aus folgenden ausgewählt:

(i)   2,7 bis 4,3% CaO,
(ii)  2,7 bis 3,5% MgO,
(iii) 5,36 bis 8,80% $Y_2O_3$.

Dieses Pulver hat eine Partikelgröße von 0,1 bis 40 µm und wird auf 100% durch ein monoklines Zirconoxidpulver auf 100% ergänzt, das im Verhältnis wenigstens 90% Partikel mit einer Größe von 0,1 bis 10 µm aufweist.

II) Brennen der erhaltenen Mischung bei einer Temperatur im Bereich von 1000 bis 1200°C während wenigstens einer Stunde, damit das Karbonat in entsprechende Oxide zersetzt und um teilweise das monokline Zirkonoxid in kubisches Zirkonoxid umzuwandeln.

III) Inniges Mischen von 96 bis 98 Gew.-% des nach II) erhaltenen teilweise stabilisierten Zirconoxides mit 2 bis 4 Gew.-% eines tonerdehaltigen hydraulischen Bindemittels und Zerkleinern des Ganzen bis ein Pulver erhalten wird, von dem 90% eine Partikelgröße in einem Bereich von 0,1 bis 10 µm aufweist.

3. Feuerfester Formkörper, dadurch gekennzeichnet, daß dieser durch Gießen einer Zusammensetzung nach Anspruch 1, die mit Wasser in eine Suspension gebracht worden ist, in eine Gießform und nach dem Abbinden der Zusammensetzung durch Sinterung der gegossenen Zusammensetzung in einem Temperaturbereich von 1550 bis 1700°C erhalten wird.

4. Formkörper nach Anspruch 3, dadurch gekennzeichnet, daß dieser ein Mikrogefüge aufweist, das von kubischen Zirconoxidkörnern mit einer Größe von 15 bis 70 µm gebildet wird, die von monoklinen Zirconoxidkörnern mit einer Größe von 0,3 bis 15 µm umgeben sind, daß das kubische Zirconoxid in der kristallographischen Analyse 60 bis 70% des gesamten Zirconoxids bildet und daß das Formstück ein hohes spezifisches Gesicht über 4930 kg/m³ und eine geringe offene Porosität von 3,6 bis 9% aufweist.

5. Formstück nach Anspruch 3 oder 4, dadurch gekennzeichnet, daß es die Form eines Mundstückes für das Gießen von Stahl hat.

9

**Claims**

1. Refractory composition consisting essentially of:

(a) 96 to 98% by weight of zirconia partially stabilised by calcium oxide, magnesium oxide or yttrium oxide, at least 90% of which has a particle size of between 0,1 and 10 μm, and

(b) 2 to 4% by weight of an aluminous hydraulic binder, this composition also having the following overall chemical analysis (within the limits of precision of the analysis):

   1,4 to 3,2% by weight of $Al_2O_3$,
   3,7 to 4,6% by weight of CaO, or 0,36 to 1,15% by weight of CaO plus 2,7 to 3,5% by weight of MgO, or 0,36 to 1,15% by weight of CaO plus 5,36 to 8,80% by weight of $Y_2O_3$,

   Less than 1% by weight of $SiO_2$ + $Na_2O$ + $Fe_2O_3$ + $TiO_2$ taken together,
   and $ZrO_2$ to make up to 100%.

2. Process for the preparation of a composition according to Claim 1, characterised in that it comprises the following steps:

I) intimately mixing a stabilising amount of powdered calcium carbonate, magnesium carbonate or yttrium carbonate, calculated in the form of oxide, chosen from amongst the following:

   (i) 2,7 to 4,3% by weight of CaO,
   (ii) 2,7 to 3,5% by weight of MgO and
   (iii) 5,36 to 8,80% by weight of $Y_2O_3$,

   this powder having a particle size of 0,1 to 40 μm, with an amount, to make up to 100%, of a powdered monoclinic zirconia, at least 90% of which consists of particles having a size of 0,1 to 10 μm,

II) calcining the mixture obtained at a temperature within the range 1000 to 1200°C for at least one hour, so as to decompose the carbonate to the corresponding oxide and partially to convert the monoclinic zirconia to cubic zirconia, and

III) intimately mixing 96 to 98% by weight of the partially stabilised zirconia obtained under II) with 2 to 4% by weight of an aluminous hydraulic binder, and grinding the whole mixture until a powder is obtained, at least 90% of which has a particle size within the range of 0,1 to 10 μm.

3. Refractory moulding obtained by casting, in a mould, a composition according to Claim 1, suspended in water, and then, after this composition has set, by sintering the moulded composition at a temperature within the range of 1550 to 1700°C.

4. Refractory moulding according to Claim 3, characterised in that it has a microtexture formed of grains of cubic zirconia having a size of 15 to 70 μm, surrounded by grains of monoclinic zirconia having a size of 0,3 to 15 μm, the cubic zirconia representing about 60 to 70% of the total zirconia in crystallographic analysis, and this moulding having a high density of more than 4,930 kg/m³ and a low open porosity of 3,6 to 9%.

5. Refractory moulding according to Claim 3 or 4, characterised in that it is in the form of a nozzle for casting steel.